# EUROPÄISCHE PATENTSCHRIFT

(11) **EP 0 887 138 B1**
(45) Veröffentlichungstag und Bekanntmachung des Hinweises auf die Patenterteilung: **07.08.2002**
(21) Anmeldenummer: 98109939.3
(22) Anmeldetag: 30.05.1998
(51) Int. Cl.: B23D 61/18

(54) **Diamantsägeseil**
Diamond saw wire
Fil de sciage diamanté

(30) Priorität: 23.06.1997 DE 19726421
(43) Veröffentlichungstag der Anmeldung: 30.12.1998
(73) Patentinhaber: Thaler, Siegmund, 6252 Breitenbach (AT)
(72) Erfinder: Thaler, Siegmund, 6252 Breitenbach (AT)
(74) Vertreter: Flosdorff, Jürgen, Dr.

(56) Entgegenhaltungen:
- WO-A-98/35778
- IT-B- 1 188 065
- IT-B- 1 266 675

## Beschreibung

Die Erfindung betrifft ein Diamantsägeseil, das aus einem vorzugsweise aus Stahldraht bestehenden Seil, darauf im Abstand voneinander befestigten Diamantringen und Abstandhaltern zwischen den Ringen besteht, wobei die Diamantringe aus einem vorzugsweise metallischen, allgemein ring- oder hülsenförmigen Grundkörper und einer darauf aufgebrachten Diamanten enthaltenden Schicht bestehen.

Derartige Diamantsägeseile werden hauptsächlich beim Abbau von Naturstein im Steinbruch verwendet, und führen dort zu einer gegenüber früheren Abbautechniken erheblich erhöhten Ausbeute bei einer signifikanten Verringerung des Arbeitsaufwandes.

Seit einiger Zeit werden Diamantsägeseile außerdem zunehmend in der Baubranche verwendet, um Betonstrukturen zu schneiden und abzutragen. Verglichen mit konventionellen Methoden, die Preßlufthämmer oder Abrißbirnen verwenden, ist der Einsatz von Diamantsägeseilen mit erheblich weniger Lärm, Staub und Erschütterungen verbunden.

Ein Diamantsägeseil besteht im allgemeinen aus einem Stahldrahtseil, auf dem Diamantringe befestigt sind, die durch Abstandhalter in Position gehalten werden sollen. Die Stahldrahtseile, die meist einen Durchmesser von etwa 5 mm haben, müssen sehr beständig gegenüber Biegewechselbeanspruchungen sein. Obwohl sich Stahldraht als Material für das Seil besonders bewährt hat, ist die vorliegende Erfindung nicht auf dieses Material für das Trägerseil des Diamantsägeseils beschränkt, sondern sie ist auch auf Seile anderer Materialien wie Kunststoff anwendbar, wenn diese die erforderlichen Festigkeitseigenschaften haben.

Die auf dem Seil befestigten Diamantringe haben im allgemeinen einen hülsen- oder ringförmigen Grundkörper mit einer zentrischen Bohrung, die entsprechend dem Durchmesser des verwendeten Seils meist 5 mm beträgt. Auf der Außenseite des metallischen Grundkörpers befindet sich die Diamanten enthaltende Schicht, die meist 5 bis 6 mm breit ist. Zur Ausbildung der Diamanten enthaltenden Schicht kann ein Diamant-Metallpulvergemisch auf den metallischen Grundkörper aufgesintert werden. Bei dem Metallpulvergemisch kann es sich beispielsweise um Kobaltpulver als Grundelement und Wolframkarbit oder Kupferpulver als Zuschlagstoffe handeln. Der Anteil und die Größe der Diamantkörner variiert bei diesen Gemischen je nach Verwendungszweck.

Die Diamanten enthaltende Schicht kann auch dadurch hergestellt werden, daß eine geschlossene Schicht aus kleinen Diamantkörnern galvanisch mit einer Nickelschicht auf dem Grundkörper befestigt wird. Denkbar ist auch, daß die Diamanten enthaltende Schicht aus einer mit Metall- und Diamantsplittern versetzten Harzmasse besteht.

Die Abstandhalter des Diamantsägeseils haben die Aufgabe, die Diamantringe auf dem Seil in dem vorgesehenen Abstand voneinander zu halten. Als Abstandhalter sind in den Zwischenräumen zwischen den Diamantringen auf das Trägerseil aufgebrachte Kunststoffmanschetten bekannt, die zudem verhindern, daß Gesteinsstaub in das Trägerseil eindringt und dieses allmählich zerstört. Bekannt ist ferner die Verwendung von Spiralfedern als Abstandhalter, die an den Stirnflächen der Diamantringe anliegen sowie eine Kombination von Kunststoffmanschetten und Spiralfedern. Die Spiralfedern können mittels metallischer Klemmringe auf dem Trägerseil fixiert werden.

Abgesehen davon, daß -wie oben erwähnt ist- das Trägerseil sehr großen Biegewechselbeanspruchungen ausgesetzt ist, denen es standhalten muß, bestehen weitere Probleme bei dem Diamantsägeseil darin, daß die Diamantringe auf dem Trägerseil in axialer Richtung unverschieblich und darüberhinaus verdrehsicher gehalten sein müssen. Wenn die Diamantringe auf eine oder beide Arten bewegbar sind, ist das gesamte Diamantsägeseil praktisch unbrauchbar.

Während die Anforderungen an eine axial unverschiebliche Befestigung der Diamantringe beim Zersägen von Betonstrukturen, bei dem natürlich auch die Stahlbewehrung durchgesägt wird, besonders hoch sind, spielt beim Abbau von Naturstein im Steinbruch die verdrehsichere Halterung der Diamantringe eine erhöhte Rolle, da hier die auftretenden Schnittkräfte geringer sind, das Diamantsägeseil aber im Dauerlastbetrieb über Zeitspannen von etwa einem Monat einsetzbar sein müssen, während die Nutzungsdauer eines Diamantsägeseils beim Zersägen von Betonstrukturen nur einige Stunden beträgt. Beim Langzeit-Dauerlastbetrieb läßt bei den bisher bekannten Diamantsägeseilen häufig vorzeitig - d.h. vor Abnutzung der Diamantschicht der Diamantringe- die Haltekraft der Diamantringe in Umfangsrichtung nach, so daß sich die Diamantringe beim Betrieb um das Trägerseil drehen, womit das Diamantsägeseil wiederum unbrauchbar wird.

Aus der IT-B-1266675 ist ein Diamantsägeseil gemäß dem Oberbegriff des Patentanspruchs 1 bekannt. Die Innenwandfläche der Grundkörper der Diamantringe des vorbekannten Diamantsägeseils hat über die gesamte Länge des Grundkörpers einen konstanten Radius, und die spiralförmigen Vertiefungen in der Innenwandfläche erstrecken sich über die gesamte Länge der Grundkörper.

Der vorliegenden Erfindung liegt die Aufgabe zugrunde, ein Diamantsägeseil so zu verbessern, daß seine Diamantringe größeren Belastungen insbesondere in axialer Richtung standhalten.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Bei dem erfindungsgemäßen Diamantsägeseil sind beidseitig in der Innenwandfläche des Grundkörpers spiralförmige Vertiefungen ausgebildet.

Die spiralförmigen Vertiefungen können eine Querschnittsform haben, die mit der zugehörigen Kontur von Spiralfedern übereinstimmt, die erfindungsgemäß als Abstandshalter in die Endabschnitte jeweils zweier benachbarter Diamantringe eingeschraubt werden, wobei die Spiralfedern in der Endstellung infolge eines etwas verringerten Innendurchmessers der spiralförmigen Vertiefung in einen Klemmsitz genommen sein können. Durch die eingeschraubten Spiralfedern wird jeder Diamantring beidseitig mit Federkraft in seiner Position gehalten, d.h. auf der einen Seite durch eine Druckkraft und auf der anderen Seite durch Zugkraft der eingeschraubten Feder, so daß die Diamantringe vollkommen verdrehsicher und unverschieblich auf dem Trägerseil gehalten sind. Versuche haben gezeigt, daß ein derart ausgebildetes Diamantsägeseil einer mehr als doppelten Belastung als ein herkömmliches Diamantsägeseil standhält.

Außerdem ist erfindungsgemäß vorgesehen, daß der Innendurchmesser des hülsenoder ringförmigen Grundkörpers in Richtung seiner beiden seitlichen Ränder wenigstens jeweils über einen Abschnitt seiner axialen Erstrekung ansteigt, so daß zwischen dem Grundkörper und dem hindurchgeführten Trägerseil beidseitig ein querschnittlich etwa keilförmig oder bogenförmig sich verbreiternder Zwischenraum verbleibt, der mit einem Kunststoffmaterial ausgefüllt wird, wobei hierfür ein thermoplastischer Kunststoff wie TPU bevorzugt ist.

Die Spiralfedern werden bevorzugt mit Kunststoff ausgespritzt, wodurch sie mit dem Kunststoff praktisch zu einer Einheit zusammenwachsen. Als Kunststoff wird bevorzugt ein wiederum TPU (technisches Polyurethan) verwendet.

Die Vertiefungen, insbesondere spiralförmigen Mulden, sind zweckmäßigerweise bereits in den Grundkörperhälften ausgebildet, so daß mit dem Aufsintern der Diamantschicht der Herstellungsvorgang der Diamantringe beendet ist.

Mit großem Vorteil wird ferner vorgeschlagen, daß die spiralförmigen Vertiefungen von der jeweiligen Stirnfläche des Grundkörpers aus einwärts verlaufen. Dabei ist bevorzugt, daß der Durchmesser der spiralförmigen Vertiefung nicht konstant bleibt, sondern an ihrem inneren Ende etwas abnimmt, um so praktisch einen Anschlag für eine in die spiralförmige Vertiefung eingeschraubte Spiralfeder zu bilden, wie oben bereits erwähnt ist.

Die beiden in Umfangsrichtung umlaufenden Keile blockieren bei den in der Praxis auftretenden Belastungen jegliche axiale Verschiebung der Diamantringe, so daß das erfindungsgemäße Diamantsägeseil in dieser Hinsicht praktisch unzerstörbar ist. Diese Maßnahme hat zur Folge, daß das erfindungsgemäße Diamantsägeseil auch ohne Spiralfedern gegenüber dem Stand der Technik erheblich verbessert ist, so daß hierin ein selbständiger Erfindungsgedanke zu sehen ist.

Ferner wird vorgeschlagen, daß der Grundkörper aus zwei Grundkörperhälften zusammengesetzt ist, die vorzugsweise eine identische Form haben und entlang der zur Längsachse des Grundkörpers senkrechten Mittelebene miteinander verbunden sind.

Der Grundkörper bzw. die beiden Grundkörperhälften sind bevorzugt Drehteile, die schnell und preiswert herstellbar sind, wobei beispielsweise auch die Herstellung im Tiefziehverfahren in Betracht kommt. Die Grundkörperhälften bestehen bevorzugt aus Automatenstahl, der für das bevorzugte Aufsintern der Diamantschicht verkupfert ist.

Die Diamantringe werden erfindungsgemäß in der Weise hergestellt, daß die zwei Grundkörperhälften in einem Röhrchen angeordnet werden, dessen Innendurchmesser mit dem Außendurchmesser des Grundkörpers übereinstimmt. In den durch den hülsen- oder ringförmigen Abschnitt des Grundkörpers, dessen beide ringförmige Endflansche und die Innenwand des Röhrchen begrenzten Raum wird das Diamant-Metallpulvergemisch eingeführt, das anschließend unter Bildung einer dauerhaften Verbindung der beiden Grundkörperhälften auf den so gebildeten zusammengesetzten Grundkörper aufgesintert wird. Da im Gegensatz zu den bisher bekannten Diamantringen keine Nachbearbeitung (wie z.B. nachträgliches Einschneiden von Nuten und Bohrungen zur Erhöhung der Verdrehsicherheit) erforderlich ist, ist der erfindungsgemäße Diamantring erheblich kostengünstiger herstellbar.

Da die bevorzugt angeordneten keilförmigen Kunststofffüllungen die Unverschieblichkeit der Diamantringe gewährleisten, kann der Grundkörper eine erheblich kürzere axiale Erstreckung haben, als dies beim Stand der Technik der Fall ist.

Die keilförmig sich zu den axialen Enden hin verbreiternden Abschnitte können sich im wesentlichen konisch erweitern oder aber querschnittlich bogenförmig. Hierdurch wird praktisch jegliche Kantenpressung auf das Trägerseil bei einem bogenförmigen Verlauf des Diamantsägeseils vermieden, wodurch eine Zerstärung des Trägerseils infolge hoher Wechselbiegespannungen praktisch ausgeschlossen wird.

Der Grundkörper hat zweckmäßiger zwei sich zu den Rändern konisch erweiternde Umfangsflächen, die in ringförmige Stirnwände übergehen, die senkrecht zur Längsachse des Grundkörpers verlaufen. In den inneren Umfangsflächen der konischen Wandabschnitte sind die Vertiefungen bzw. flachen Mulden ausgespart, ansonsten können die konischen Wandabschnitte eine konstante Wandstärke haben. Die ringförmigen Flansche bzw. Stirnwände haben zweckmäßigerweise eine größere Wandstärke.

Dadurch, daß die Diamantschicht an den axialen Enden von den ringförmigen Stirnwänden des Grundkörpers umfaßt sind, wird die Diamantschicht beim Betrieb sehr viel gleichmäßiger abgeschliffen, als dies bei herkömmlichen Diamantringen der Fall ist. Hierdurch erhöht sich die Nutzungsdauer des erfindungsgemäßen Diamantsägeseils weiter.

Von den ringförmigen Stirnwänden stehen in beiden axialen Richtungen bevorzugt ringförmige Ansätze vor, die den Bereich der spiralförmigen Vertiefungen, in die die Spiralfedern eingeschraubt sind, verlängern, so daß diese vollkommen sicher darin gehalten sind. Hierdurch wird der freie Abstand zwischen den Diamantringen verringert und die axiale Haltekraft weiter erhöht.

Das erfindungsgemäße Diamantsägeseil ist praktisch unzerstörbar und dennoch einfacher und preiswerter herstellbar als die bisher bekannten Diamantsägeseile.

Weitere Einzelheiten der Erfindung ergeben sich aus der nachfolgenden Beschreibung sowie anhand der Zeichnung. Dabei zeigen:
- Fig. 1: den Aufbau eines Diamantsägeseils in einer rein schematischen Seitenansicht;
- Fig. 2: einen Vertikalschnitt durch eine Grundkörperhälfte und
- Fig. 3: eine teilweise geschnittene Seitenansicht des Bereichs eines Diamantringes eines bevorzugten Diamantsägeseils.

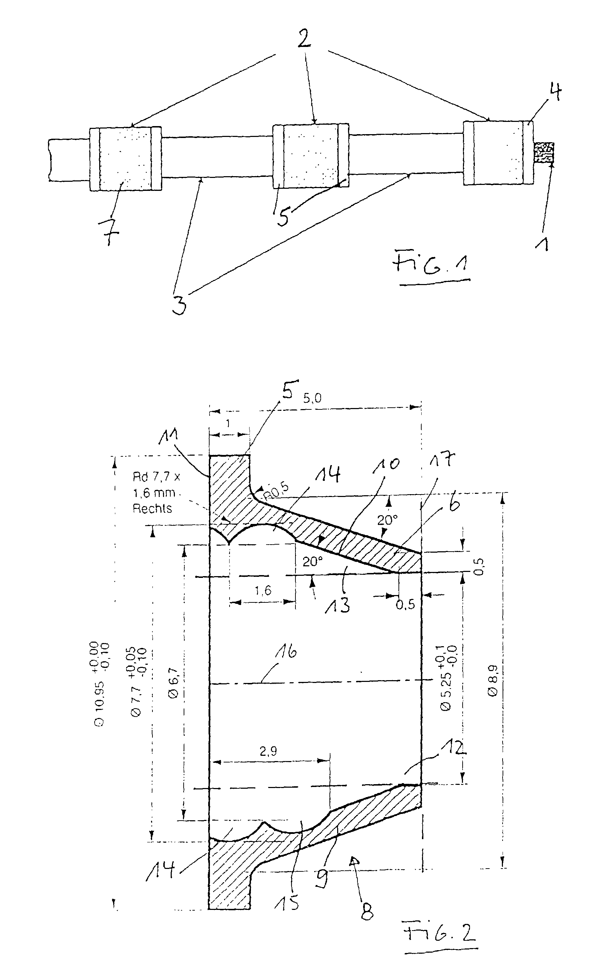

Fig. 1 zeigt einen kurzen Abschnitt eines Diamantsägeseils, das aus einem Stahldrahtseil 1, darauf befestigten Diamantringen 2 und zwischen den Diamantringen 2 angeordneten Abstandhaltern 3 besteht.

Die Diamantringe 2 bestehen aus einem vorzugsweise aus Metall bestehenden Grundkörper 4, von denen Fig. 1 nur die beiden stirnseitigen Flansche 5 erkennen läßt, sowie aus einer in den Zwischenraum zwischen den Flanschen 5 und der Umfangswand 6 aufgebrachten Diamanten enthaltenden Schicht 7.

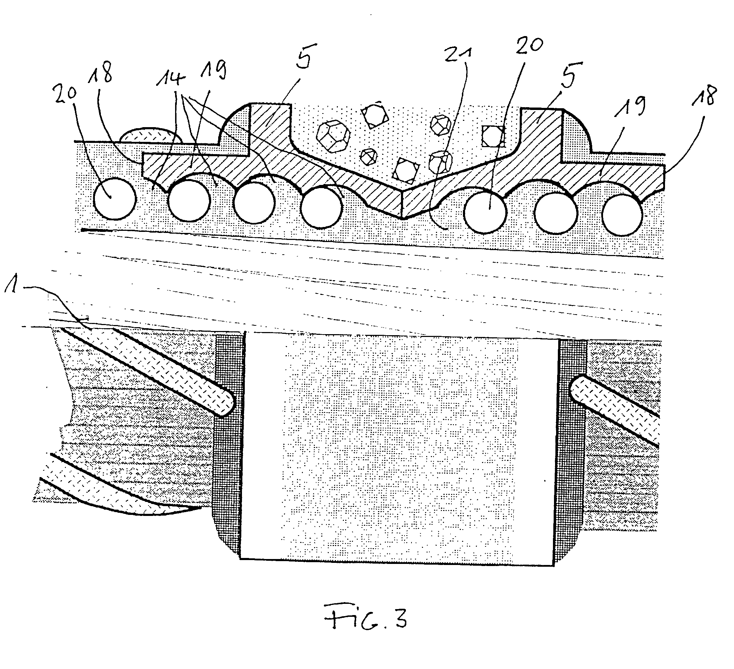

Jeder Grundkörper 4 der Diamantringe 2 ist aus zwei Grundkörperhälften 8 zusammengesetzt, von denen Fig. 2 die linke Hälfte zeigt. Die vorzugsweise als Drehteil hergestellte Grundkörperhälfte 8 enthält einen konischen Wandabschnitt 9, die in den bereits oben erwähnten seitlichen Flansch 5 übergeht. Der konische Wandabschnitt 9 hat eine innere Umfangsfläche 10, deren Durchmesser wenigstens über einen Abschnitt ihrer axialen Erstreckung in Richtung der Stirnseite 11 des Grundkörpers ansteigt, wodurch zwischen der Grundkörperhälfte 8 und dem durch gestrichelte Linien angedeuteten Trägerseil 12 ein querschnittlich keilförmiger Zwischenraum 13 bildet, der mit Kunststoff ausgefüllt wird.

An den konisch sich erweiternden Abschnitt 10 der inneren Umfangsfläche schließt sich zur Stirnseite 11 hin eine spiralförmige Vertiefung 14 in der inneren Umfangswand der Grundkörperhälfte 8 an. Die spiralförmige Vertiefung hat eine flache Muldenform, die an die zugehörige Kontur einer in Fig. 2 nicht dargestellten Spiralfeder angepaßt ist, die in die spiralförmige Vertiefung 14 eingeschraubt wird.

Wie Fig. 2 zeigt, hat die innerste Windung 15 der spiralförmigen Vertiefung 14 einen etwas kleineren Innendurchmesser als die an der Stirnseite davorliegende Windung, wodurch eine eingeschraubte Schraubenfeder in der Endlage in einen Klemmsitz genommen wird.

Fig. 3 zeigt eine besonders bevorzugte Ausführungsform, bei der von den Flanschen 5 ringförmige Ansätze 19 vorstehen, die in Stirnflächen 18 enden. Hierdurch ist der Bereich der spiralförmigen Vertiefung 14 erheblich vergrößert, so daß die eingeschraubten Spiralfedern 20 vollkommen sicher befestigt sind. Die Kunststofffüllung ist in der Figur mit 21 bezeichnet.

## Patentansprüche

1. Diamantsägeseil, das ein vorzugsweise aus Stahldraht bestehendes Seil (12), darauf im Abstand voneinander befestigte Diamantringe (2) und Abstandhalter (3) zwischen den Diamantringen (2) aufweist, wobei diese aus einem vorzugsweise metallischen, allgemein hülsen- oder ringförmigen Grundkörper (4) und einer darauf aufgebrachten Diamanten enthaltenden Schicht bestehen, wobei beidseitig in der Innenwandfläche des Grundkörpers (4) spiralförmige Vertiefungen (14,15) ausgebildet sind, als Abstandhalter Spiralfedern (20) vorgesehen sind und die Spiralfedern (20) in die Endabschnitte jeweils zweier benachbarter Diamantringe (4) eingeschraubt sind,
**dadurch gekennzeichnet,**
**daß** sich der Durchmesser der inneren Umfangswand (10) des Grundkörpers (4) zu beiden axialen Rändern (11, 18) hin wenigstens jeweils über einen Abschnitt ihrer axialen Erstreckung erhöht, so daß zwischen dem Grundkörper (4 bzw. 8) und dem hindurchgeführten Seil (12) beidseitig ein querschnittlich keilförmig sich verbreiternder Zwischenraum (13) verbleibt, der mit einem Kunststoffmaterial ausgefüllt ist.

2. Diamantsägeseil nach Anspruch 1,
**dadurch gekennzeichnet, daß** die Vertiefungen (14, 15) eine flache Muldenform haben.

3. Diamantsägeseil nach Anspruch 2,
**dadurch gekennzeichnet, daß** die spiralförmigen Vertiefungen (14, 15) von der jeweiligen Stirnfläche (11) des Grundkörpers (4) aus einwärts verlaufen.

4. Diamantsägeseil nach einem der Ansprüche 1 bis 3,
**dadurch gekennzeichnet, daß** die beiden spiralförmigen Vertiefungen (14, 15) des Grundkörpers (4) querschnittlich mit der zugehörigen Kontur der Spiralfedern (20) übereinstimmen.

5. Diamantsägeseil nach einem der Ansprüche 1 bis 4,
**dadurch gekennzeichnet, daß** der Grundkörper (4) aus zwei Grundkörperhälften (8) zusammengesetzt ist, die entlang der zur Längsachse (16) des Grundkörpers (4 bzw. 8) senkrechten Mittelebene (17) miteinander verbunden sind.

6. Diamantsägeseil nach Anspruch 1 oder 5,
**dadurch gekennzeichnet, daß** sich der Abschnitt (10) im wesentlichen konisch erweitert.

7. Diamantsägeseil nach einem der Ansprüche 1 bis 6,
**dadurch gekennzeichnet, daß** der Grundkörper (4) zwei sich zu den Rändern (11, 18) konisch erweiternde Umfangswände aufweist, die in ringförmige Stirnwände (5) übergehen, die senkrecht zur Längsachse (16) des Grundkörpers (4) verlaufen.

8. Diamantsägeseil nach einem der Ansprüche 1 bis 7,
**dadurch gekennzeichnet, daß** von den Stirnwänden in beiden axialen Richtungen ringförmige Ansätze (19) vorstehen, die sich im wesentlichen in Richtung der Längsachse (16) erstrecken.

9. Diamantsägeseil nach einem der Ansprüche 1 bis 8,
**dadurch gekennzeichnet, daß** die Spiralfedern (20) mit Kunststoff ausgespritzt sind.

## Claims

1. A diamond saw wire which comprises a rope (12) preferably consisting of steel wire, diamond rings (2) mounted thereon in spaced-apart relationship, and spacers (3) between said diamond rings (2), said rings consisting of a preferably metallic, generally sleeve- or ring-like basic body (4) and a diamond-containing layer applied thereto, spiral recesses (14, 15) being formed at both sides in the inner wall surface of said basic body (4), spiral springs (20) being provided as spacers, and said spiral springs (20) being respectively screwed into the end sections of two neighboring diamond rings (4),
**characterized in**
**that** the diameter of said inner circumferential wall (10) of said basic body (4) is increased towards both axial edges (11, 18) at least over a respective section of the axial extension thereof, so that a space (13) which is enlarged in cross section in wedge-shaped fashion remains at both sides between said basic body (4 and 8, respectively) and said rope (12) passed therethrough, said space (13) being filled with a plastic material.

2. The diamond saw wire according to claim 1,
**characterized in that** said recesses (14, 15) have a flat through-like shape.

3. The diamond saw wire according to claim 2,
**characterized in that** said spiral recesses (14, 15) extend inwards from the respective face (11) of said basic body (4).

4. The diamond saw wire according to any one of claims 1 to 3,
**characterized in that** said two spiral recesses (14, 15) of said basic body (4) coincide in cross section with the associated contour of said spiral springs (20).

5. The diamond saw wire according to any one of claims 1 to 4,
**characterized in that** said basic body (4) is composed of two basic body halves (8) which are interconnected along the center plane (17) perpendicular to the longitudinal axis (16) of said basic body (4 and 8, respectively).

6. The diamond saw wire according to claim 1 or 5,
**characterized in that** said section (10) is substantially conically enlarged.

7. The diamond saw wire according to any one of claims 1 to 6,
**characterized in that** said basic body (4) comprises two circumferential walls which are conically enlarged towards said edges (11, 18) and pass into ring-like front walls (5) which extend in a direction perpendicular to the longitudinal axis (16) of said basic body (4).

8. The diamond saw wire according to any one of claims 1 to 7,
**characterized in that** annular attachments (19) which substantially extend in the direction of said longitudinal axis (16) project from said front walls in both axial directions.

9. The diamond saw wire according to any one of claims 1 to 8,
**characterized in that** said spiral springs (20) are spray-coated with a plastic material.

## Revendications

1. Câble de sciage diamanté, qui présente un câble (12) de préférence en fil d'acier, des bagues diamantées (2) fixées dessus de façon espacée et des écarteurs (3) entre les bagues diamantées (2), celles-ci comprenant un corps de base (4) de préférence métallique, généralement en forme de manchon ou d'anneau et une couche contenant des diamants appliquée dessus, des cavités (14, 15) en forme de spirales étant aménagées des deux côtés dans la surface de paroi intérieure du corps de base (4), des ressorts en spirale (20) étant prévus comme écarteurs et les ressorts en spirale (20) étant vissés dans les parties d'extrémité de respectivement deux bagues diamantées voisines,
**caractérisé en ce que** le diamètre de la paroi périphérique (10) intérieure du corps de base (4) augmente en direction des deux bords (11, 18) axiaux au moins respectivement sur une partie de leurs étendues axiales, de sorte que, entre le corps de base (4 ou 8) et le câble (12) traversé, il reste des deux côtés un espace (13) qui s'élargit en forme de clavette vu en coupe transversale et est rempli d'un matériau plastique.

2. Câble de sciage diamanté selon la revendication 1,
**caractérisé en ce que** les cavités (14, 15) ont une forme d'auge plate.

3. Câble de sciage diamanté selon la revendication 2,
**caractérisé en ce que** les cavités (14, 15) en forme de spirales vont de la surface frontale (11) concernée du corps de base (4) vers l'intérieur.

4. Câble de sciage diamanté selon l'une quelconque des revendications 1 à 3,
**caractérisé en ce que** les deux cavités (14, 15) en forme de spirales du corps de base (4) coïncident, vu en coupe transversale, avec le contour respectif des ressorts en spirale (20).

5. Câble de sciage diamanté selon l'une quelconque des revendications 1 à 4,
**caractérisé en ce que** le corps de base (4) est composé de deux demi-corps de base (8), qui sont reliés entre eux le long du plan médian (17) perpendiculaire à l'axe longitudinal (16) du corps de base (4 ou 8).

6. Câble de sciage diamanté selon la revendication 1 ou 5,
**caractérisé en ce que** la partie (10) s'élargit sensiblement en forme de cône.

7. Câble de sciage diamanté selon l'une quelconque des revendications 1 à 6,
**caractérisé en ce que** le corps de base (4) présente deux parois périphériques s'élargissant en forme de cône vers les bords (11, 18), qui font place à des parois frontales (5) de forme annulaire, lesquelles sont agencées perpendiculairement à l'axe longitudinal (16) du corps de base (4).

8. Câble de sciage diamanté selon l'une quelconque des revendications 1 à 7,
**caractérisé en ce que** des parois frontales débordent dans les deux directions axiales des embases (19) de forme annulaire, qui s'étendent sensiblement dans le sens de l'axe longitudinal (16).

9. Câble de sciage diamanté selon l'une quelconque des revendications 1 à 8,
**caractérisé en ce que** les ressorts en spirale (20) sont injectés avec du plastique.
